# EUROPEAN PATENT SPECIFICATION

(11) **EP 1 231 465 B1**
(45) Date of publication and mention of the grant of the patent: **17.07.2013**
(21) Application number: 02002763.7
(22) Date of filing: 07.02.2002
(51) Int. Cl.: G01N 27/419, G01N 33/00

(54) **Gas sensor element with sensor cell and oxygen monitor at substantially the same location in the gas flow**
Gassensorelement mit Sensorzelle und Sauerstoffmonitor an praktisch gleicher Stelle im Gasstrom
Capteur de gaz avec la cellule de détecteur et le moniteur d'oxygène sensiblement alignés dans la même position dans le flux de gaz

(30) Priority: 08.02.2001 JP 2001032533; 28.12.2001 JP 2001398749
(43) Date of publication of application: 14.08.2002
(73) Proprietor: DENSO CORPORATION, Kariya-city, Aichi-pref., 448-0029 (JP)
(72) Inventor: Mizutani, Keigo, Nishio-city Aichi-pref. 445-0012 (JP); Imamura, Hiroo, Nishio-city Aichi-pref. 445-0012 (JP); Makino, Daisuke, Nishio-city Aichi-pref. 445-0012 (JP); Tanaka, Akio, Kariya-city Aichi-pref. 448-0029 (JP)
(74) Representative: TBK

(56) References cited:
- EP-A- 0 831 322
- EP-A- 0 937 979
- WO-A-01/02845
- US-A- 4 770 760
- PATENT ABSTRACTS OF JAPAN vol. 013, no. 228 (P-877), 26 May 1989 (1989-05-26) & JP 01 039545 A (NISSAN MOTOR CO LTD), 9 February 1989 (1989-02-09)

## Description

### BACKGROUND OF THE INVENTION

### 1 Technical Field of the Invention

The present invention relates generally to a gas sensor element which may be used to measure the concentration of a specified gas component such as a nitrogen oxide contained in exhaust gasses of an automotive engine, and more particularly to an improved structure of such a gas sensor element designed to minimize an error of a sensor output.

### 2 Background Art

The air pollution caused by exhaust emissions of automotive engines is an essential problem to be solved in modern society. The emission regulations about harmful products contained in the exhaust emissions is being made more rigorous with the years. In such a background, gas sensor elements capable of detecting the harmful products in the exhaust emissions have, therefore, been sought. Effective control of automobile emissions has been proposed which is achieved by measuring the concentration of a harmful product contained in the emissions such as a nitrogen oxide (NOx) directly using a gas sensor element and feeding a sensor output back to an engine burning control system and/or a catalytic system.

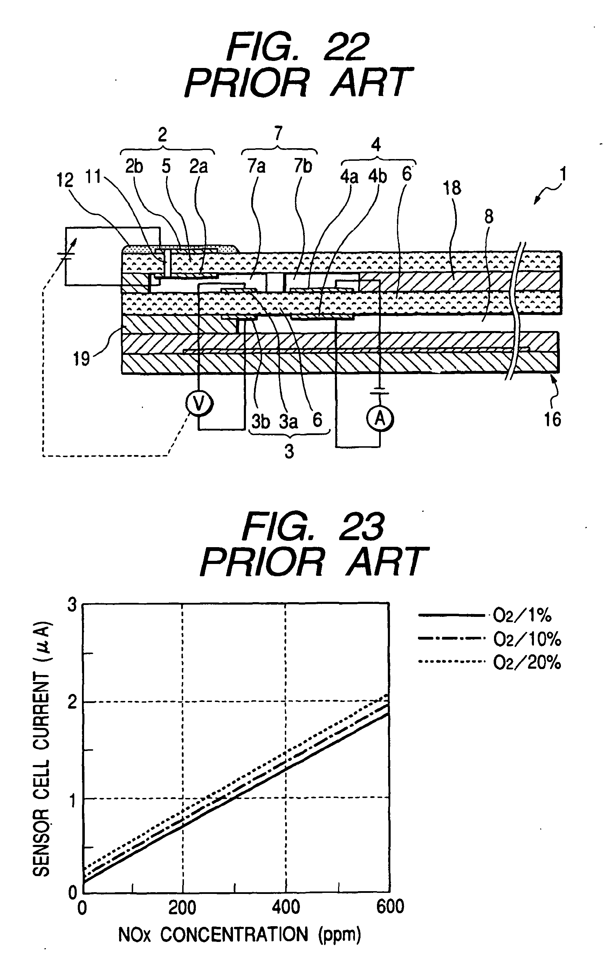

Fig. 22 shows one example of conventional gas sensor elements of the type as discussed above.

The gas sensor element 1 consists essentially of an oxygen pump cell 2, an oxygen monitor cell 3, and a sensor cell 4. The oxygen pump cell 2 includes an oxygen ion-conducting member 5 and a pair of electrodes 2a and 2b and works to pump oxygen molecules into or out of an upstream chamber 7a of a gas cavity 7. The oxygen monitor cell 3 includes an oxygen ion-conducting member 6 and a pair of electrodes 3a and 3b and works to monitor the concentration of oxygen molecules within the upstream chamber 7a and provide a sensor signal indicative thereof. The sensor signal is fed back to the oxygen pump cell 2 through a controller to keep the concentration of oxygen molecules within the upstream chamber 7a constant.

The sensor cell 4 is disposed within a downstream chamber 7b of the gas cavity 7 and made up of a portion of the oxygen ion-conducting member 6 and a pair of electrodes 4a and 4b. The sensor cell 4 works to measure oxygen ions produced by reducing and dissociating (ionizing) NOx molecules within the downstream chamber 7b to determine the concentration of NOx molecules within the gas cavity 7. Specifically, the oxygen concentration within the upstream chamber 7a is, as described above, kept constant, so that the oxygen concentration within the downstream chamber 7b leading to the upstream chamber 7a will be constant. The amount of the oxygen ions passing through the sensor cell 4, that is, the magnitude of oxygen ion current flowing through the sensor cell 4 will, thus, be a function of the NOx concentration. This permits the NOx concentration to be measured regardless of a variation in concentration of the oxygen molecules contained in exhaust gasses of automotive engines.

The above structure of the gas sensor element 1 has, however a problem in that the concentrations of oxygen molecules near the oxygen monitor cell 3 and the sensor cell 4 differ from each other slightly, thereby resulting in an error of the output of the sensor cell 4. Specifically, the oxygen monitor cell 3 is located upstream of the sensor cell 4 in a direction of flow of the gasses within the gas cavity 7. Within the gas cavity 7, the concentration of oxygen molecules usually changes, thus resulting in a difference in concentration of oxygen molecules between the oxygen monitor cell 3 and the sensor cell 4. Therefore, even if the concentration of oxygen molecules within the gas cavity 7 is kept constant under feedback control using the output of the oxygen monitor cell 3, the concentration of oxygen molecules near the electrode 4a of the sensor cell 4 differs from that near the electrode 3a of the oxygen monitor cell 3, which produces the error of the output of the sensor cell 4. Fig. 23 illustrates relations between a current flowing through the sensor cell 4 and a change in concentration of NOx within the gas cavity 7 for different concentrations of oxygen molecules within the gas cavity 7. The graph shows that the current produced by the sensor cell 4 changes as a function of the concentration of NOx and that a nonnegligible error of the output of the sensor cell 4 arises from a change in concentration of oxygen molecules within the gas cavity 7.

Further, WO 0102845 A1 discloses an electrochemical gas sensor. The gas sensor comprises a first gas measuring chamber which comes into contact with the gas to be measured and two additional gas measuring chambers and (17) which are connected to the first gas measuring chamber via diffusion barriers.

EP 0831322 A2 discloses a further gas sensor.

US 4770760 A discloses an NOx sensor for determining the concentration of NOx contained in a measurement gas, having first and second electrochemical detecting elements each of which includes an oxygen pumping cell and an oxygen sensing cell.

JP-A-1039545 discloses a further exhaust gas sensor.

### SUMMARY OF THE INVENTION

It is therefore a principal object of the present invention to avoid the disadvantages of the prior art.

It is another object of the present invention to provide a gas sensor element which is designed to minimize an error of a senor output. The present invention relates to a gas sensor element according to claim 1.

There is provided a gas sensor element which may be built in a gas sensor used in an engine burning control system and/or a catalytic system of automotive vehicles. The gas sensor element comprises: (a) a gas cavity into which gasses consisting essentially of oxygen molecules and a specified oxygen containing gas are admitted through a given dispersion resistance; (b) an oxygen pump cell including an oxygen ion-conducting member, a first pump cell electrode, and a second pump cell electrode which is exposed to the gas cavity, the oxygen pump cell being responsive to application of a voltage across the first and second pump cell electrodes to selectively pump oxygen molecules into and out of the gas cavity for adjusting a concentration of the oxygen molecules within the gas cavity to a desired value; (c) an oxygen monitor cell including an oxygen ion-conducting member, a first monitor cell electrode, and a second monitor cell electrode which is exposed to the gas cavity, the oxygen monitor cell working to produce an electric signal indicative of a concentration of the oxygen molecules within the gas cavity; and (d) a sensor cell including an oxygen ion-conducting member, a first sensor cell electrode, and a second sensor cell electrode which is exposed to the gas cavity, the sensor cell working to produce an electric signal indicative of a concentration of the specified oxygen containing gas within the gas cavity. The oxygen monitor cell and the sensor cell are disposed at substantially the same location in a direction of flow of the gasses within the gas cavity. Specifically, the concentration of oxygen molecules hardly changes in a direction perpendicular to the flow of the gasses, so that the concentrations of oxygen molecules around the second monitor cell electrode and the second sensor cell electrode are substantially identical with each other. This minimizes an error of the signal outputted from the sensor cell arising from a variation in concentration of oxygen molecules within the gas cavity, thereby improving the accuracy of determining the concentration of the specified oxygen containing gas within the gas cavity.

In the preferred mode of the invention, a reference gas cavity is provided into which gasses containing a constant concentration of oxygen molecules are admitted. The first monitor cell electrode is exposed to the reference gas cavity. The oxygen monitor cell is responsive to application of a voltage across the first and second monitor cell electrodes to produce a current flowing between the first and second monitor cell electrodes as a function of the concentration of oxygen molecules within the gas cavity.

The voltage applied across the first and second pump cell electrodes is controlled so as to bring the current produced by the oxygen monitor cell into agreement with a constant value for adjusting the concentration of oxygen molecules within the gas cavity to the desired value.

The first monitor cell electrode is exposed to the reference gas cavity. The oxygen monitor cell may alternatively be designed to produce an electromotive force between the first and second monitor cell electrodes as a function of the concentration of oxygen molecules within the gas cavity. The voltage applied across the first and second pump cell electrodes is controlled so as to bring the electromotive force produced by the oxygen monitor cell into agreement with a constant value for adjusting the concentration of oxygen molecules within the gas cavity to the desired value.

The sensor cell is responsive to application of a voltage across the first and second sensor cell electrodes to produce a current flowing between the first and second sensor cell electrodes as a function of the concentration of the specified oxygen containing gas within the gas cavity.

A difference between the current produced by the oxygen monitor cell and the current produced by the sensor cell may be provided as a sensor output indicating the concentration of the specified oxygen containing gas.

The gas cavity consists essentially of a first chamber and a second chamber which communicate with each other through a given diffusion resistance. The oxygen pump cell is disposed within the first chamber. The oxygen monitor cell and the sensor cell are disposed within the second chamber.

Each of the second pump cell electrode and the second monitor cell electrode exposed to the gas cavity may be made of a cermet containing main metallic components of Pt and Au. The second sensor cell electrode exposed to the gas cavity may be made of a cermet whose main component is a metal alloy containing Pt and at least one of Rh and Pd.

The second oxygen monitor cell electrode and the second sensor cell electrode have ends oriented to an upstream side of the flow of the gasses within the gas cavity.

An interval between a line about which the second monitor cell electrode of the oxygen monitor cell and the second sensor cell electrode of the sensor cell are arranged to be axi-symmetric and a center line of a gas path formed upstream of the second monitor cell and the second sensor cell within the gas cavity is denoted as ΔW.

An air-fuel ratio sensor may further be provided which works to measure a concentration of an air-fuel ratio of the gasses. The air-fuel ratio sensor is made up of an oxygen ion-conducting member, a first electrode, and a second electrode attached to surfaces of the oxygen ion-conducting member. The first electrode is exposed to a gas space within which the gasses exist. The second electrode is exposed to a reference gas cavity into which gasses containing a constant concentration of oxygen molecules are admitted.

The gas cavity has a width and a length extending in the direction of flow of the gasses. The second monitor cell electrode and the second sensor cell electrode may be arranged in parallel to each other in a widthwise direction of the gas cavity.

The gas sensor element has a length extending in the direction of flow of the gasses. The second monitor cell electrode and the second sensor cell electrode may alternatively be laid to overlap each other in a thicknesswise direction perpendicular to the length of the gas sensor element.

### BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1(a) is a vertical sectional view which shows a reference gas sensor element;
Fig. 1(b) is a transverse sectional view taken along the line *A-A* in Fig. 1 (a);
Fig. 2 is an exploded perspective view which shows the gas sensor element of Figs. 1(a) and 1(b);
Fig. 3 is a graph which shows relations between a current flowing through a sensor cell and the concentration of NOx molecules for different concentrations of oxygen molecules;
Fig. 4(a) is a vertical sectional view which shows a reference gas sensor element;
Fig. 4(b) is a partially horizontal sectional view taken along the line *B-B* in Fig. 4(a);
Figs. 4(d), and 4(e) are partially horizontal sectional views which show modification of an oxygen monitor cell and a sensor cell in accordance with the invention;
Fig. 5(a) is a vertical sectional view which shows a reference gas sensor element;.
Fig. 5(b) is a transverse sectional view taken along the line *A-A* in Fig. 5(a);
Fig. 6(a) is a vertical sectional view which shows a comparative gas sensor element;
Fig. 6(b) is a transverse sectional view taken along the line *A-A* in Fig. 6(a);
Fig. 7 is an exploded perspective view which shows the gas sensor element of Figs. 6(a) and 6(b);
Fig. 9(a) is a vertical sectional view which shows a gas sensor element according to an embodiment of the invention;
Fig. 9(b) is a transverse sectional view taken along the line *A-A* in Fig. 9(a);
Fig. 10 is a graph which shows relations between a current produced by an oxygen pump cell and a voltage applied to the oxygen pump cell for different concentrations of oxygen molecules;
Fig. 11 is a graph which shows relations between a difference in currents produced by a sensor cell and an oxygen monitor cell and the concentration of NOx for different concentrations of oxygen molecules;
Fig. 12(a) is a vertical sectional view which shows a gas sensor element according to a further embodiment of the invention;
Fig. 12(b) is a transverse sectional view taken along the line *A-A* in Fig. 12(a);
Fig. 13(a) is a vertical sectional view which shows a reference gas sensor element;
Fig. 13(b) is a transverse sectional view taken along the line *A-A* in Fig. 13(a);
Fig. 14(a) is a vertical sectional view which shows a gas senor element;
Fig. 14(b) is a partially horizontal sectional view taken along the line *B-B* in Fig. 14(a);
Fig. 14(c) is partially horizontal sectional view which shows an oxygen monitor cell and a sensor cell;
Fig. 15 is a graph which shows a relation between an error of a sensor output and a longitudinal shift between electrodes of an oxygen monitor cell and a sensor cell;
Fig. 16 is a graph which shows a relation between an error of a sensor output and a lateral shift of electrodes of an oxygen monitor cell and a sensor cell from a center line of a gas path
Fig. 17(a) is a vertical sectional view which shows a reference gas sensor element;
Fig. 17(b) is a transverse sectional view taken along the line *A-A* in Fig. 17(a);
Fig. 18(a) is a vertical sectional view which shows a further comparative gas sensor element;
Fig. 18(b) is a partially horizontal sectional view taken along the line *B-B* in Fig. 18(a);
Fig. 19 is an exploded perspective view which shows the gas sensor element of Figs. 18(a) and 18(b);
Fig. 20(a) is a vertical sectional view which shows a reference gas sensor element;
Fig. 20(b) is a transverse sectional view taken along the line *A-A* in Fig. 20(a);
Fig. 21 is an exploded perspective view which shows the gas sensor element of Figs. 20(a) and 20(b);
Fig. 22 is a vertical sectional view which shows a conventional gas sensor element; and
Fig. 23 is a graph which shows relations between a current flowing through a sensor cell and the concentration of NOx molecules for different concentrations of oxygen molecules in the gas sensor element as illustrated in Fig. 22.

### DESCRIPTION OF THE PREFERRED EMBODIMENTS

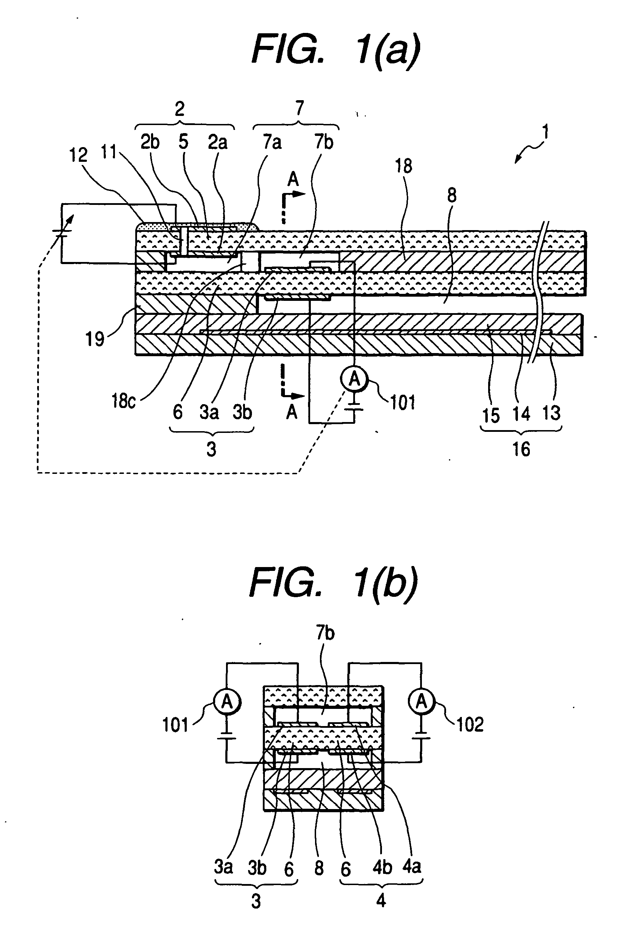

Referring now to the drawings, wherein like numbers refer to like parts in several views, particularly to Figs. 1(a) and 1(b), there is shown a gas sensor element 1 which may be installed in an exhaust pipe of an internal combustion engine to measure the concentration of a specified oxygen-containing gas component such as NOx molecules contained in exhaust gasses for use in engine burning control and./or catalytic systems.

The following discussion will refer, as an example, to such measurement of NOx contained in exhaust gasses of an automotive engines. For the measurement of the NOx concentration in the exhaust gasses, the gas sensor element 1 is disposed within a cylindrical casing and installed in the exhaust pipe with a left end thereof, as viewed in the drawing, exposed to the exhaust gasses and a right end thereof exposed to air used as a reference gas.

The gas sensor element 1 is made of a lamination of a first solid electrolyte sheet 5, a second solid electrolyte sheet 6, a first spacer 18, a second spacer 19, and a heater 16 which have lengths oriented in the same direction and longitudinal center lines thereof substantially coinciding with each other. The first solid electrolyte plate 5 forms an oxygen pump cell 2 together with electrodes 2a and 2b. The second solid electrolyte sheet 6 forms an oxygen monitor cell 3 together with electrodes 3a and 3b and a sensor cell 4 together with electrodes 4a and 4b. The first spacer 18 defines a gas cavity 7 between the first and second solid electrolyte sheets 5 and 6. The second spacer 19 defines a reference gas cavity 8 between the second solid electrolyte sheet 6 and the heater 16. The heater 16 works to heat up the lamination to a desired sensor activating temperature.

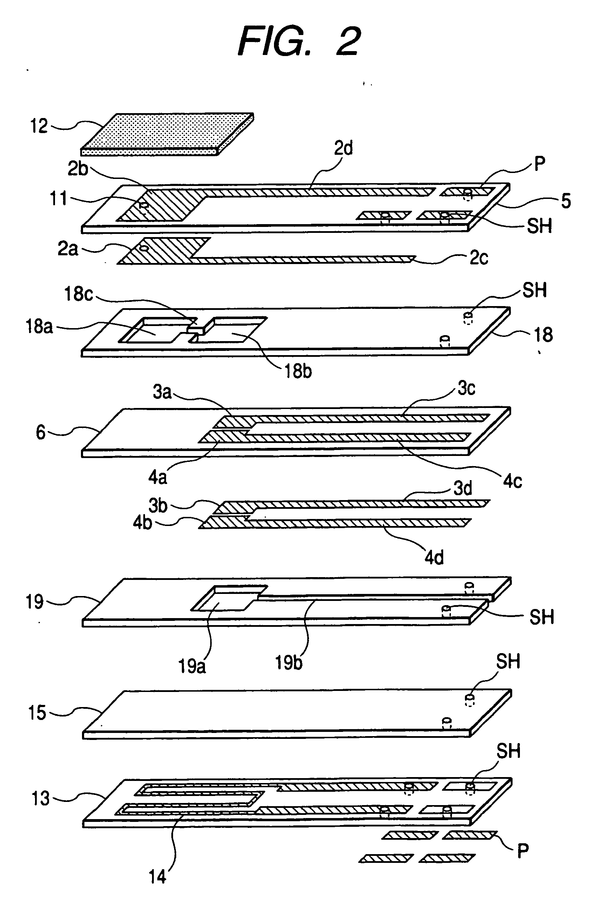

The gas cavity 7 leads to the inside of the exhaust pipe of the engine (i.e., a gas space within which a gas to be measured exists) for admitting the exhaust gasses thereinto. The gas cavity 7 is defined, as clearly shown in Fig. 2, by two square holes 18a and 18b formed in the first spacer 18 disposed between the first and second solid electrolyte sheets 5 and 6. The holes 18a and 18b communicate with each other through an orifice 18c. Specifically, the gas cavity 7 is made up of a first chamber 7a defined by the hole 18a and a second chamber 7b defined by the hole 18b which are arrayed in a lengthwise direction of the sensor element 1 (i.e., the direction of flow of the gasses).

The first chamber 7a leads inside the exhaust pipe through a pinhole 11 which is formed through a thickness of a tip of the first electrolyte sheet 5 and serves as a diffusion resistor. The size of the pinhole 11 is so selected as to bring a diffusion rate of the measurement gas (i.e., NOx molecules) admitted therethrough into the first and second chambers 7a and 7b into agreement with a desired one.

The first solid electrolyte sheet 5 has disposed thereon a porous protective layer 12 made of a porous alumina material, for example. The protective layer 12 covers the electrode 2b of the oxygen pump cell 2 and the pinhole 11 for protecting the electrode 2b and the electrode 2a exposed to the first chamber 7a from harmful gaseous components and preventing the pinhole 11 from clogging. Instead of the pinhole 11, a measurement gas permeable porous member may be disposed in the tip of the first solid electrolyte sheet 5.

The reference gas cavity 8 leads outside the exhaust pipe or the ambient atmosphere for admitting thereinto the air used as a reference gas. The reference gas cavity 8 is, as clearly shown in Fig. 2, defined by a square hole 19a formed in the second spacer 19. The hole 19a leads to the atmosphere through a slit 19a extending in the lengthwise direction of the second spacer 19. The first and second spacers 18 and 19 are made of an insulating material such as alumina. The first and second solid electrolyte sheets 5 and 6 are each made of an oxygen ion conductive electrolyte such as zirconia or ceria.

The oxygen pump cell 2 works to reduce and dissociate or ionize oxygen molecules (O₂) contained the exhaust gasses existing outside the gas sensor element 1 and pump them into the gas cavity 7 and also to dissociate or ionize and pump the oxygen molecules (O₂) outside the gas cavity 7 when the concentration of oxygen within the gas cavity 7 is higher than a given level for keeping the concentration of oxygen molecules within the gas cavity 7 at the given level. The oxygen pump cell 2, as described above, includes the electrodes 2a and 2b attached to opposed sides of the first solid electrolyte sheet 5. The electrode 2a is exposed to the first chamber 7a located upstream of the second chamber 7b in flow of the gasses in the gas cavity 7. The electrode 2b is exposed to the gas space or inside the exhaust pipe through the porous protective layer 12.

The oxygen monitor cell 3 works to measure the concentration of oxygen molecules within the gas cavity 7 and is made up of the second solid electrolyte sheet 6 and the electrodes 3a and 3b attached to opposed sides of the second solid electrolyte sheet 6. The electrode 3a is exposed to the second chamber 7b located downstream of the first chamber 7a in the flow of the gasses in the gas cavity 7. The electrode 3b is exposed to the ambient atmosphere through the reference gas cavity 8.

The sensor cell 4 works to discharge oxygen produced when NOx molecules contained in the exhaust gasses are dissociated within the second chamber 7b to the reference gas cavity 8 to measure the concentration of NOx molecules. The sensor cell 4 is, as clearly shown in Fig. 1(b), made up of the second solid electrolyte sheet 6 and the electrodes 4a and 4b attached to opposed sides of the second solid electrolyte sheet 6. Like the oxygen monitor cell 3, the electrode 4a is exposed to the second chamber 7b. The electrode 4b is exposed to the ambient atmosphere through the reference gas cavity 8.

The feature of the invention is that the oxygen monitor cell 3 and the sensor cell 4 are disposed within the gas cavity 7 at substantially the same location in a direction of flow of the gasses within the gas cavity 7. In other words, the oxygen monitor cell 3 and the sensor cell 4 in the first embodiment (Reference) are, as can be seen from Figs. 1(b) and 2, aligned with a width-wise direction of the gas sensor element 1 (i.e., the second solid electrolyte sheet 6) to be symmetrical with respect to the longitudinal center line of the second solid electrolyte sheet 6 (i.e., a longitudinal center line of a gas path defined in the gas cavity 7), thereby resulting in the same concentration of oxygen molecules on the electrode 3a of the oxygen monitor cell 3 and the electrode 4a of the sensor cell 4 regardless of the distribution of oxygen molecules within the gas cavity 7. This is because the distribution of oxygen molecules within the gas cavity 7 is apt to change in the direction of flow of the gasses (i.e., the lengthwise direction of the gas sensor element 1), but less susceptible to change in a direction perpendicular to the flow of the gasses.

The electrode 2a of the oxygen pump cell 2 exposed to the first chamber 7a and the electrode 3a of the oxygen monitor cell 3 exposed to the second chamber 7b are preferably made of a material which is inactive with respect to NOx or hardly dissociate NOx for minimizing a dissociated amount of NOx contained in the gasses. For instance, porous cermet electrodes containing main components of Pt and Au may be used. A metal component of the cermet electrodes preferably contains 1% to 10% by weight of Au. The electrode 4a of the sensor cell 4 exposed to the second chamber 7b is preferably made of a material which is highly active to NOx or capable of dissociating NOx easily. For instance, a porous cermet electrode which contains main components of Pt and Rh or a main component of Pt and at least one of Rh and Pd may be used. A metal component of the cermet electrode preferably contains 1% to 50% by weight of Rh. The electrode 2b of the oxygen pump cell 2, the electrode 3b of the oxygen monitor cell 3, and the electrode 4b of the sensor cell 4 are preferably implemented by porous cermet electrodes containing Pt. The porous cermet electrodes may be made by firing a paste consisting of a metallic component and a ceramic component such as zirconia or alumina.

The electrodes 2a and 2b of the oxygen pump cell 2, the electrodes 3a and 3b of the oxygen monitor cell 3, and the electrodes 4a and 4b of the sensor cell 4, as clearly shown in Fig. 2, have leads 2c, 2d, 3c, 3d, 4c, and 4d for picking up electric signals therefrom. It is advisable that insulating layers made of, for example, alumina be formed on areas of the opposed major surfaces of the first and second solid electrolyte sheets 5 and 6 other than areas on which the electrodes 2a, 2b, 3a, 3b, 4a, and 4b are formed, especially between the leads 2c, 2d, 3c, 3d, 4c, and 4d and the surfaces of the first and second solid electrolyte sheets 5 and 6.

The heater 16 is made of a lamination of a heater sheet 13 and an insulating layer 15 made of alumina. The heater sheet 13 is made of an insulating material such as alumina and has patterned thereon a heater electrode 14 which is supplied with electric power to heat the cells 2, 3, and 4 up to a given activating temperature. The heater electrode 14 may be implemented by a cermet electrode made of Pt and ceramic such as alumina.

The heater electrode 14 and the electrodes 2a, 2b, 3a, 3b, 4a, and 4b of the oxygen pump cell 2, the oxygen monitor cell 3, and the sensor cell 4 are, as shown in Fig. 2, connected to terminals *P* (also called pad electrodes) formed on ends of the first solid electrolyte sheet 5 and the heater sheet 13 through holes *SH* formed in the first solid electrolyte sheet 5, the first spacer 18, the second spacer 19, the insulating layer 15, and the heater sheet 13 and the leads 2c, 2d, 3c, 3d, 4c, and 4d. The terminals *P* are connected electrically to an external control circuit (not shown) through leads soldered or brazed to the terminals *P* for transmission of signals between the cells 2, 3, and 4 and the external control circuit. Note that only the lead 2d of the electrode 2b has the terminal *P* formed integrally with the end thereof.

The first and second solid electrolyte sheets 5 and 6, the first and second spacers 18 and 19, the insulating layer 15, and the heater sheet 13 are made of thin films formed by using a doctor blade or extrusion molding. The heater electrode 14, the electrodes 2a, 2b, 3a, 3b, 4a, and 4b, the leads 2c, 2d, 3c, 3d, 4c, and 4d, and the terminals *P* are formed on the films through, for example, screen printing. The films are laminated and baked to make the gas sensor element 1.

In operation, exhaust gasses containing O₂, NOx, H₂O, etc. are admitted into the first chamber 7a of the gas cavity 7 through the porous protective layer 12 and the pinhole 11. The amount of the exhaust gasses entering the gas cavity 7 depends upon the diffusion resistances of the porous protective layer 12 and the pinhole 11. The exhaust gasses pass through the orifice 18c and reach the second chamber 7b.

Application of voltage across the electrodes 2a and 2b of the oxygen pump cell 2 so that a positive potential may be developed at the electrode 2b will cause oxygen molecules within the first chamber 7a to be ionized on the electrode 2a and pumped or transferred to the electrode 2b. Conversely, application of voltage across the electrodes 2a and 2b of the oxygen pump cell 2 so that a positive potential may be developed at the electrode 2a will cause oxygen molecules and water vapor within the exhaust pipe of the engine to be ionized on the electrode 2b and pumped or transferred to the electrode 2a. With such oxygen pumping, the concentration of oxygen molecules within the gas cavity 7 is controlled by changing the degree and orientation of the voltage applied across the electrodes 2a and 2b of the oxygen pump cell 2.

Application of voltage (e.g., 0.40V) across the electrodes 3a and 3b of the oxygen monitor cell 3 so that a positive potential may be developed at the electrode 3b exposed to the reference gas cavity 8 will cause oxygen molecules within the second chamber 7b to be ionized on the electrode 3a and pumped or transferred to the electrode 3b. The electrode 3a is, as described above, a Pt-Au cermet electrode inactive with NOx that is a target gas component to be measured, therefore, an oxygen ion current flows between the electrodes 3a and 3b as a function of the amount of O₂ passing through the porous protective layer 12 and the pinhole 11 and entering the first chamber 7a regardless of the amount of NOx. The concentration of oxygen molecules within the gas cavity 7, especially the second chamber 7b is, thus, kept constant by measuring the current flowing between the electrodes 3a and 3b through an ammeter 101, as shown in Figs. 1(a) and 1(b), and controlling the voltage applied to the electrodes 2a and 2b of the oxygen pump cell 2 so as to keep the current at a constant value (e.g., 1µA).

Application of a given voltage (e.g., 0.40V) across the electrodes 4a and 4b of the sensor cell 4 so that a positive potential may be developed at the electrode 4b exposed to the reference gas cavity 8 will cause oxygen molecules and NOx molecules within the second chamber 7b of the gas cavity 7 to be ionized on the electrode 4a, so that oxygen ions are pumped or transferred to the electrode 4b because the electrode 4a is, as described above, implemented by the Pt -Rh cermet electrode which is active with NOx. The oxygen pump cell 2 is, as described above, so controlled that the current flowing between the electrodes 3a and 3b of the oxygen monitor cell 3 may be kept at a constant level (e.g., 1µA), thereby causing the concentration of oxygen molecules within the second chamber 7b to be kept constant. The sensor cell 4 and the oxygen monitor cell 3 are, as described above, located at the same position in the direction of flow of the gasses in the gas cavity 7, so that the quantity of oxygen molecules reaching the oxygen monitor cell 3 will substantially be identical with that reaching the sensor cell 4. Thus, even if the concentration of oxygen molecules within the gas cavity 7 varies, the concentrations of oxygen molecules near the sensor cell 4 and the oxygen monitor cell 3 show substantially the same value.

Therefore, controlling the voltage applied to the oxygen pump cell 2 so as to keep the current flowing through the oxygen monitor cell 3 at a constant level (e.g., 1µA) causes the current flowing between the electrodes 4a and 4b of the sensor cell 4 to be kept at a constant level (e.g., 1 µA) if the gasses contain no NOx. Alternatively, if the gasses contain NOx molecules, the quantity of oxygen ions produced by dissociation of the NOx molecules increases, thereby causing the current flowing between the electrodes 4a and 4b of the sensor cell 4 to increase. This allows the concentration of NOx contained within the gasses to be determined with a higher degree of accuracy regardless of oxygen molecules contained in the gasses by measuring the current flowing between the electrodes 4a and 4b of the sensor cell 4 using the ammeter 102.

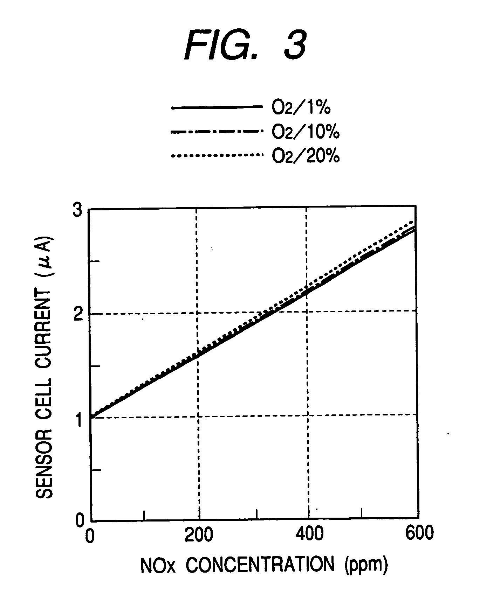

Fig. 3 illustrates characteristics of measurement of NOx by the gas sensor element 1. The graph shows that the current produced by the sensor cell 4 changes substantially in proportion to the concentration NOx contained in the gasses entering the gas cavity 7 when the concentration of oxygen molecules is 1%, 10%, or 20% and that the accuracy of measuring the concentration of NOx is greatly improved without errors arising from a variation in concentration of oxygen molecules within the gas cavity 7.

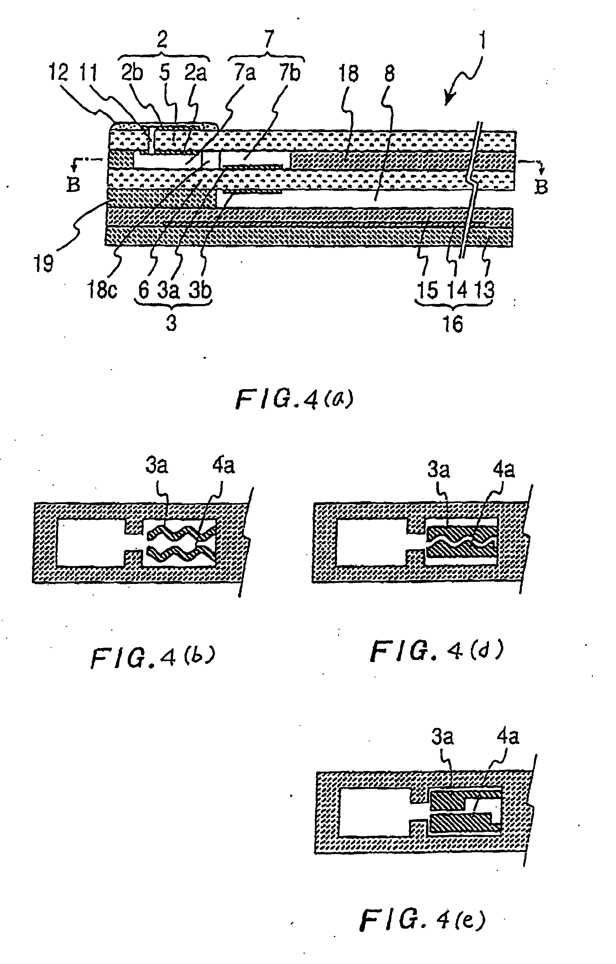

Figs. 4(a) and 4(b) show the gas sensor element 1 according to the second embodiment (Reference) in which the electrode 3a of the oxygen monitor cell 3 and the electrode 4a of the sensor cell 4 are, as clearly shown in Fig. 4(b), waved and located to be symmetrical with respect to the longitudinal center line of the second solid electrolyte sheet 6, thereby, like the first embodiment, resulting in the same concentration of oxygen molecules on the electrode 3a of the oxygen monitor cell 3 and the electrode 4a of the sensor cell 4. Other arrangements are identical with those of the first embodiment, and explanation thereof in detail will be omitted here.

The electrode 3a of the oxygen monitor cell 3 and the electrode 4a of the sensor cell 4 may be formed to have, as clearly shown in Fig. 4(d), waved opposed surfaces, or, as shown in Fig. 4(e), asymmetric opposed surfaces.

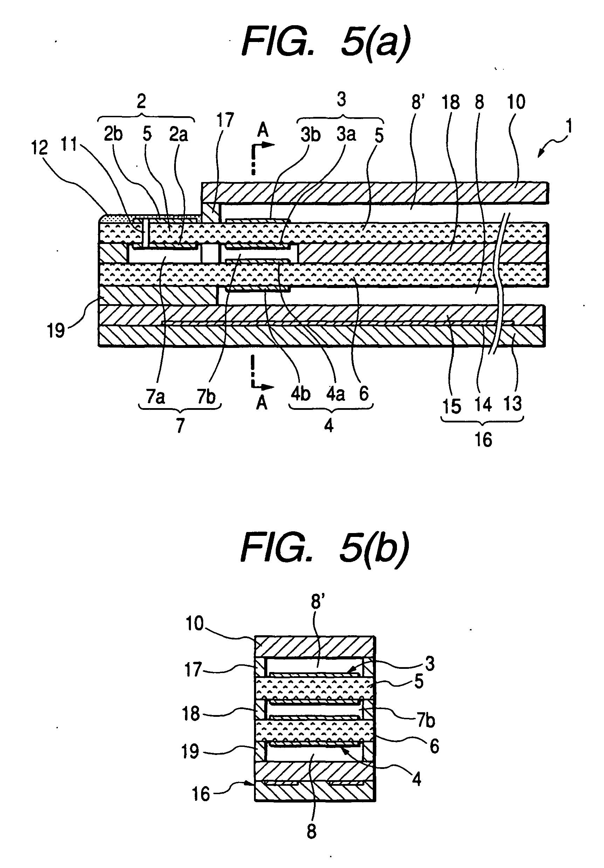

Figs. 5(a) and 5(b) illustrate the gas sensor element 1 according to the third embodiment (Reference) which is different from the first embodiment in that the electrode 3a of the oxygen monitor cell 3 and the electrode 4a of the sensor cell 4 are laid to overlap each other in a thicknesswise direction of the gas sensor element 1.

Specifically, the electrode 4a of the sensor cell 4 is disposed on the surface of the second solid electrolyte sheet 6 exposed to the second chamber 7b of the gas cavity 7, while the electrode 3a of the oxygen monitor cell 3 is disposed on the surface of the first solid electrolyte sheet 5 exposed to the second chamber 7b. A lamination of spacers 17 and 10 is disposed on a portion of the surface of the first solid electrolyte sheet 5 other than the porous protective layer 12 to define a second reference gas cavity 8'. The second reference gas cavity 8' is, like the reference gas cavity 8, formed by an opening machined in the spacer 17. The electrode 3b of the oxygen monitor cell 3 is exposed to the second reference gas cavity 8'. Likewise to the first embodiment, the oxygen monitor cell 3 and the sensor cell 4 are arranged at the same location in the direction of flow of the gasses passing through the gas cavity 7. The structure of this embodiment permits the electrodes 3a, 3b, 4a, and 4b of the oxygen monitor cell 3 and the sensor cell 4 to be increased in area as compared with the first embodiment.

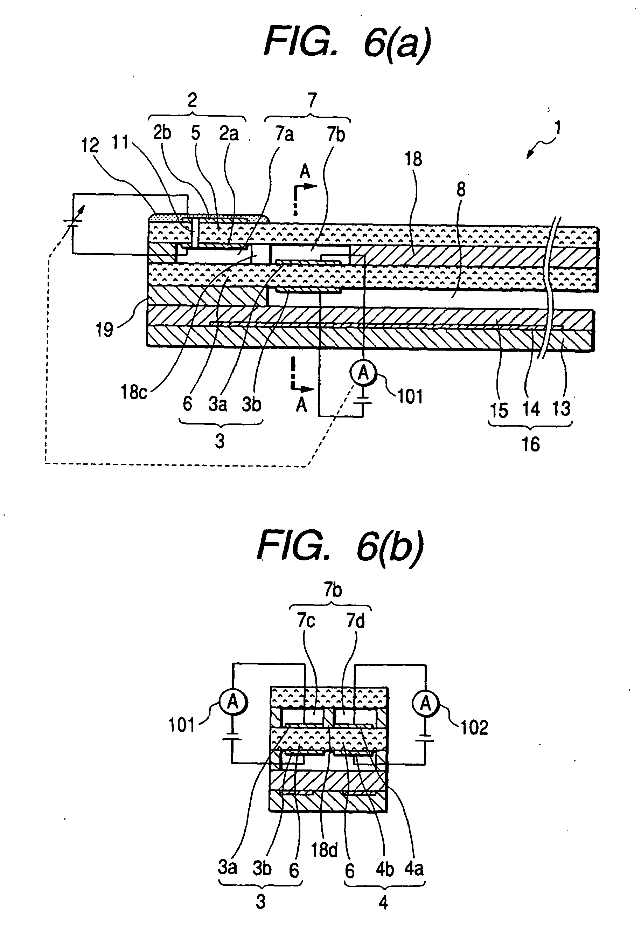

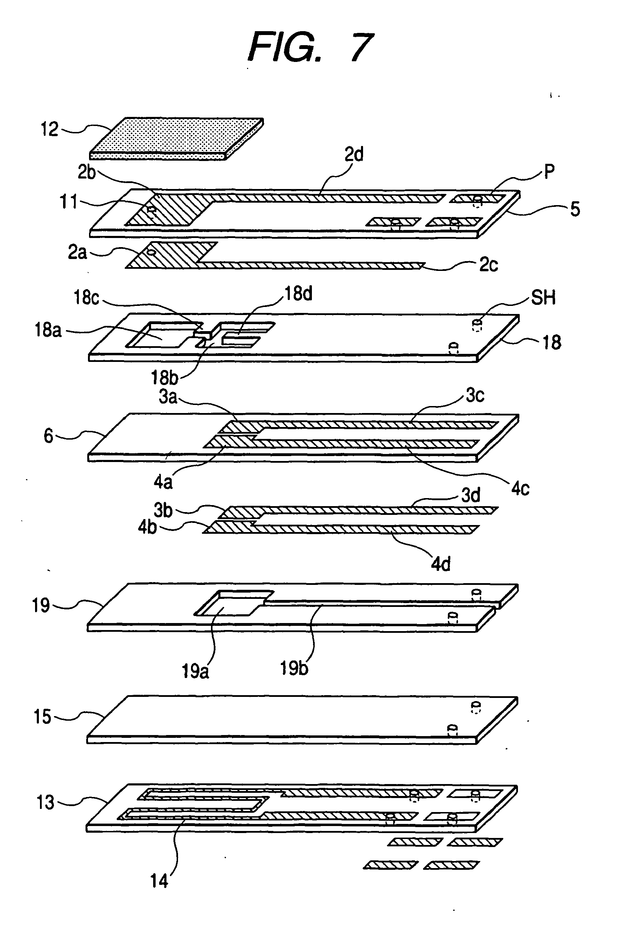

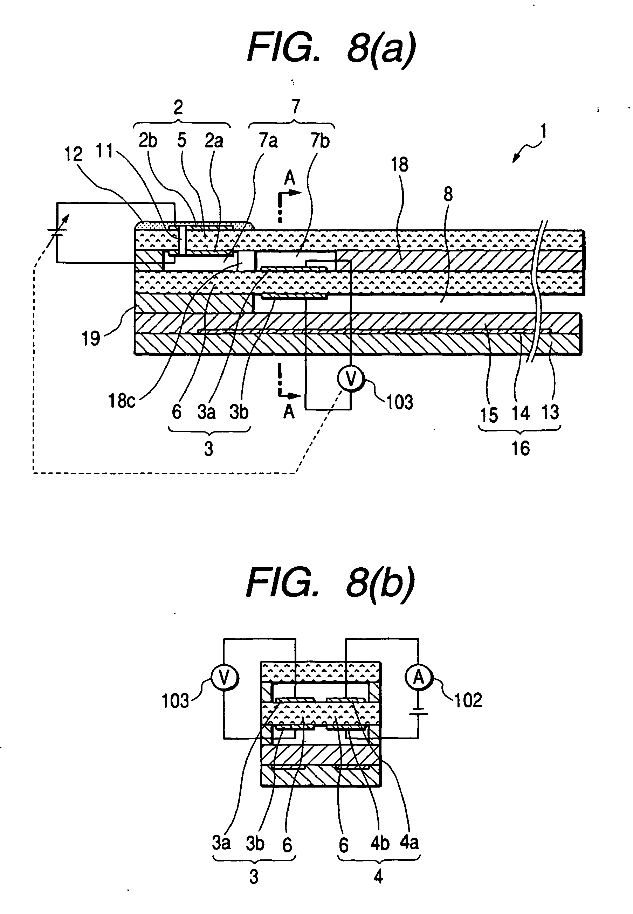

Figs. 6(a), 6(b), and 7 show the gas sensor element 1 according to the fourth embodiment (Comparative) which is different from the first embodiment in that the second chamber 7b of the gas cavity 7 is, as clearly shown in Fig. 6(b), separated by a partition 18d into first and second sub-chambers 7c and 7d within which the electrode 3a of the oxygen monitor cell 3 and the electrode 4a of the sensor cell 4 are disposed, respectively. Other arrangements are identical, and explanation thereof in detail will be omitted here.

The partition 18d is, as can be seen from Fig. 7, formed on the spacer 18 and extends within the hole 18b in alignment with the orifice 18c in the lengthwise direction of the spacer 18 so as to distribute the flow of the gasses uniformly to the first and second sub-chambers 7c and 7d. This avoids dispersion of Au contained in the electrode 3a to the electrode 4a resulting in reduction in activation of the electrode 4a to dissociate NOx and also avoids physical interference between the oxygen monitor cell 3 and the sensor cell 4, thereby improving the accuracy of measuring the concentration of NOx.

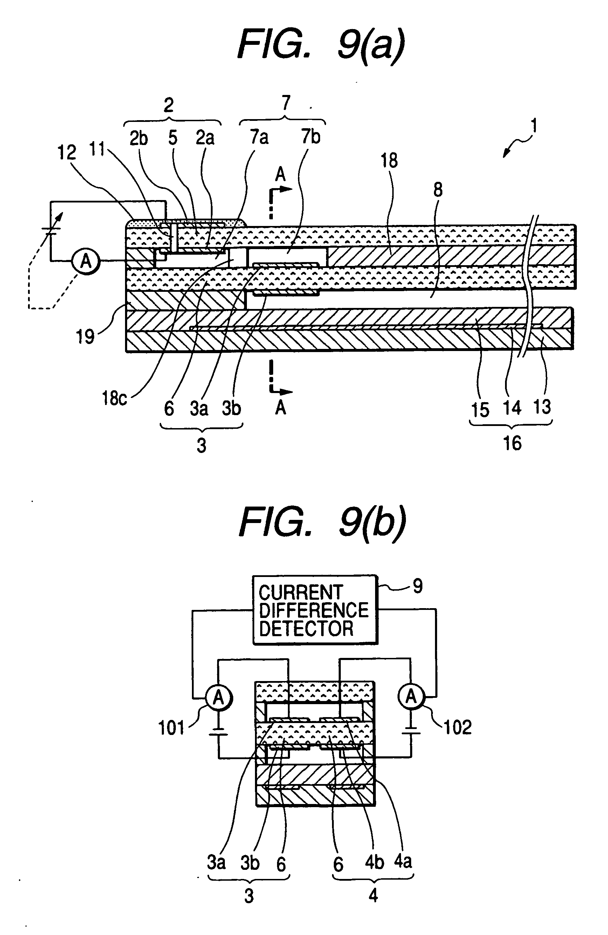

Figs. 9(a) and 9(b) show the gas sensor element 1 according to the sixth embodiment (invention) which is different from the above embodiments in that the oxygen pump cell 2 is controlled to produce a limiting current as a function of the concentration of oxygen. Other arrangements are identical, and explanation thereof in detail will be omitted here.

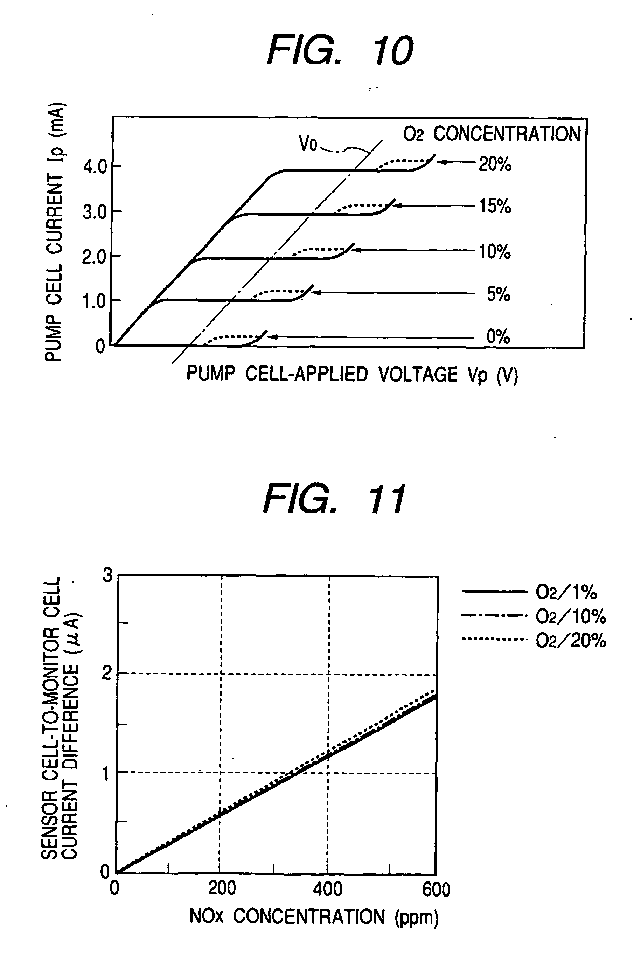

Fig. 10 illustrates a relation between the voltage *Vp* applied to the oxygen pump cell 2 and the limiting current *Ip* produced by the oxygen pump cell 2. The graph shows that the oxygen pump cell 2 produces the limiting current *Ip* as a function of the concentration of oxygen within a given applied voltage range defined by a portion of each curve extending parallel to an abscissa axis (i.e., a *Vp*-axis). The applied voltage range is shifted to a positive side of the pump cell-applied voltage *Vp* as the concentration of oxygen increases. Keeping the concentration of oxygen within the first chamber 7a of the gas cavity 7 at a constant lower level is, therefore, accomplished by controlling the pump cell-applied voltage *Vp* based on the concentration of oxygen.

However, as compared with the above embodiments in which the voltage applied to the oxygen pump cell 2 is controlled using the current flowing through the oxygen monitor cell 3, the concentration of oxygen within the second chamber 7b of the gas cavity 7 is apt to vary. The use of the current flowing through the electrodes 4a and 4b of the sensor cell 4 as an output of the gas sensor element 1 indicating the concentration of NOx may, thus, lead to an error of the sensor output. The oxygen monitor cell 3 and the sensor cell 4 are, like the above embodiments, arranged at the same location in the direction of flow of the gasses flowing through the gas cavity 7, so that substantially the same concentration of oxygen exists around the electrode 3a of the oxygen monitor cell 3 and the electrode 4a of the sensor cell 4. Therefore, the gas sensor element 1 of this embodiment is designed to measure a difference between currents flowing through the oxygen monitor cell 3 and the sensor cell 4 using a current difference detector 9 to provide it as a sensor output, thereby compensating for an error of the sensor output arising from a variation in concentration of oxygen within the second chamber 7b of the gas cavity 7.

Fig. 11 illustrates a relation between the difference between currents flowing through the oxygen monitor cell 3 and the sensor cell 4 and the concentration of NOx in the sixth embodiment. The graph shows that the sensor output changes as a function of the concentration of NOx regardless of a variation in concentration of oxygen within the second chamber 7b of the gas cavity 7.

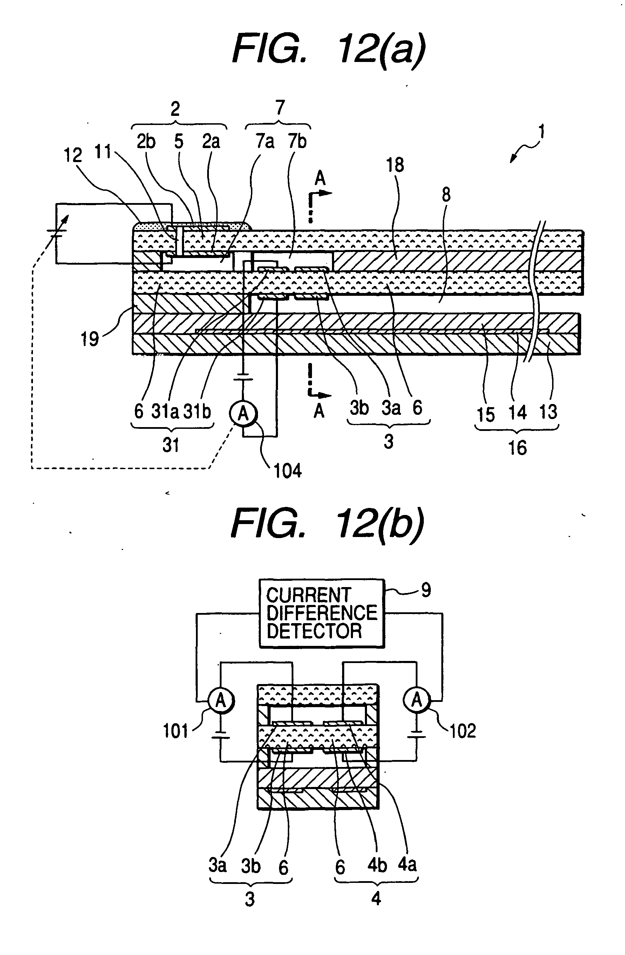

Figs. 12(a) and 12(b) illustrate the gas sensor element 1 according to the seventh embodiment (invention) which is different from the sixth embodiment of Figs. 9(a) and 9(b) only in that a second oxygen monitor cell 31 is also disposed within the second chamber 7b of the gas cavity 7. The second oxygen monitor cell 31 is made up of a portion of the second solid electrolyte sheet 6 and electrodes 31a and 31b attached to opposed surfaces of the second solid electrolyte sheet 6 and works to produce a current as a function of the concentration of oxygen within the second chamber 7b. The current produced by the second oxygen monitor cell 31 is measured by the ammeter 104 and used to control the voltage to be applied to the oxygen pump cell 2 so as to kept the concentration of oxygen as measured by the second oxygen monitor 31 constant. A difference between currents flowing through the oxygen monitor cell 3 and the sensor cell 4 is, like the sixth embodiment, determined through the current difference detector 9 to provide it as a sensor output, thereby compensating for an error of the sensor output arising from a variation in concentration of oxygen within the second chamber 7b of the gas cavity 7.

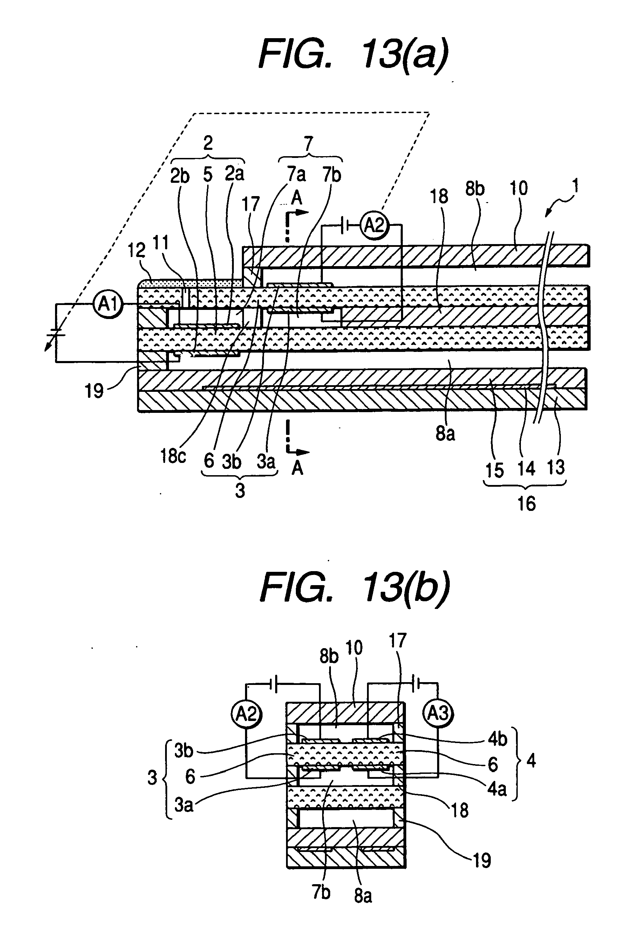

Figs. 13(a) and 13(b) illustrate the gas sensor element I according to the eighth embodiment (Reference).

The first solid electrolyte sheet 5 is disposed adjacent the heater 16 to define a reference gas cavity 8a leading to the ambient atmosphere. The electrode 2a of the oxygen pump cell 2 is exposed to the first chamber 7a of the gas cavity 7 defined in the spacer 18 interposed between the first and second solid electrolyte sheets 5 and 6, while the electrode 2b is exposed to the reference gas cavity 8a defined in the spacer 19. The electrode 4a of the sensor cell 4 and the electrode 3a of the oxygen monitor cell 3 are exposed to the second chamber 7b of the gas cavity 7 formed in the spacer 18, while the electrode 4b of the sensor cell 4 and the electrode 3b of the oxygen monitor cell 3 are exposed to a second reference gas cavity 8b defined, like the third embodiment of Figs. 5(a) and 5(b), by the spacers 17 and 10 which leads to the ambient atmosphere. The structure of this embodiment works to reduce the current leaking from the heater 16, thereby improving the accuracy of determining the concentration of NOx.

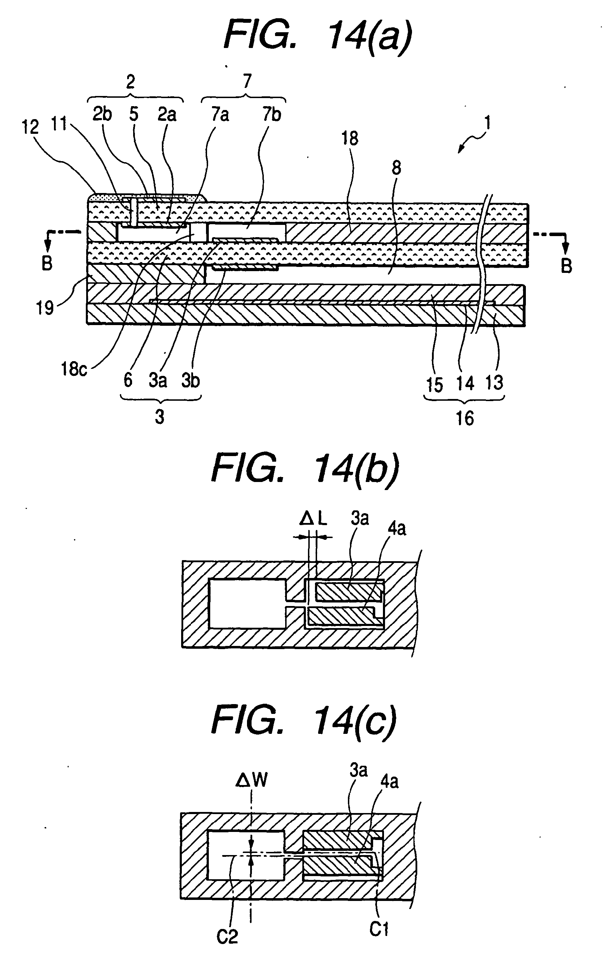

Figs. 14(a) and 14(b) illustrate the gas sensor element 1 according to the ninth embodiment (invention).

It is essential to arrange the electrode 3a of the oxygen sensor cell 3 and the electrode 4a of the sensor cell 4 at the same location in the direction of flow of the gasses through the gas cavity 7, but however, upstream ends of the electrodes 3a and 4a may be shifted, as shown in Fig. 14(b), longitudinally of the gas sensor element 1 by a distance ΔL. The electrode 3a of the oxygen monitor cell 3 and the electrode 4a of the sensor cell 4 are of a rectangular shape.

The electrode 3a of the oxygen sensor cell 3 and the electrode 4a of the sensor cell 4 may alternatively be, as shown in Fig. 14(c), shifted slightly in a widthwise direction of the gas sensor element 1 (i.e. perpendicular to the direction of flow of the gasses through the gas cavity 7). The interval between a line *C1* about which the electrodes 3a and 4a are arranged to be axi-symmetric and a longitudinal center line *C2* of the gas cavity 7 (i.e., the orifice 18c) is denoted as ΔW.

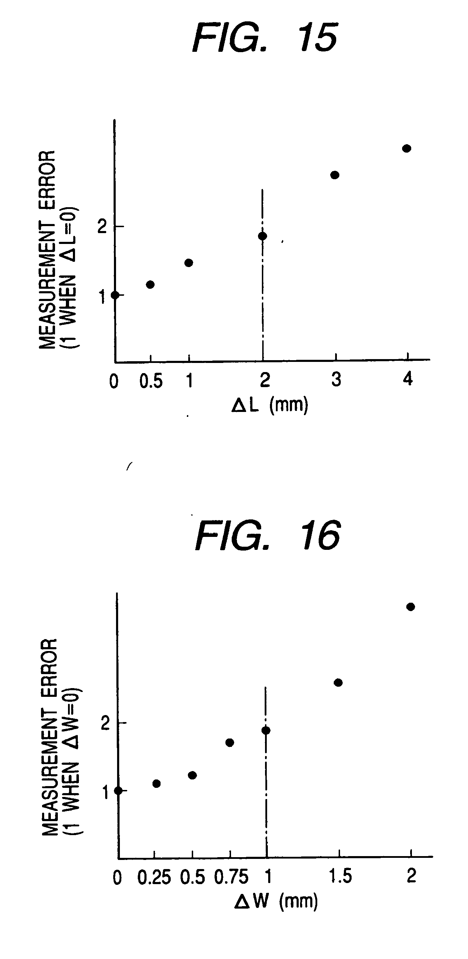

Figs. 15 and 16 represent errors in measuring the concentration of NOx which are each expressed by a ratio of a current produced by the sensor cell 4 to that produced when the distance Δ *L* and the interval Δ W are zero (0), respectively. The ratios when the distance Δ *L* and Δ Ware zero (0) are defined as one (1). The graph of Fig. 15 shows that as the distance Δ*L* decreases, the measurement error decreases and that:the measurement error when Δ*L*≦2mm is low and permissible. Similarly, the graph of Fig. 16 shows that as the interval Δ*W* decreases, the measurement error decreases and that the measurement error when Δ*W*≦ 1mm is low and permissible.

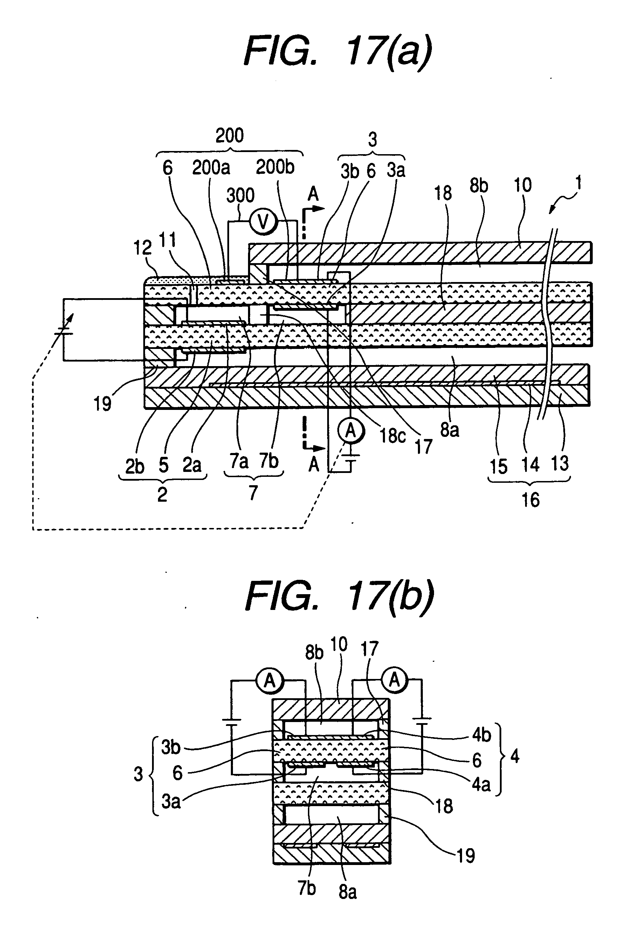

Figs. 17(a) and 17(b) illustrate the gas sensor element 1 according to the eleventh embodiment (Reference) which is a modification of the one of the eighth embodiments shown in Figs. 13(a) and 13(b) in which an air-fuel ratio sensor cell 200 is provided.

The air-fuel ratio sensor cell 200 is made up of a portion of the second solid electrolyte sheet 6 and a pair of electrodes 200a and 200b attached to opposed surfaces of the portion of the second solid electrolyte sheet 6. The electrode 200a is exposed to the gas space (i.e., the inside of the exhaust pipe). The electrode 200b is exposed to the second reference gas cavity 8b defined by the spacers 17 and 10 disposed on the second solid electrolyte sheet 6. The electrode 200a is covered with the porous protective layer 12. The electrode 200b is implemented by an electrode which is, as clearly shown in Fig. 17(b), common to the electrodes 3b and 4b of the oxygen monitor cell 3 and the sensor cell 4.

In operation, the air-fuel ratio sensor 200 works as an oxygen concentration cell and produces an electromotive force across the electrodes 200a and 200b. Since the concentration of oxygen within the reference gas cavity 8b is constant, the determination of the air-fuel ratio within the gas space or exhaust pipe of the engine is achieved by measuring the voltage developed across the electrodes 200a and 200b through a voltmeter 300. Specifically, the gas sensor element 1 of this embodiment is a composite sensor element capable of measuring both the concentration of NOx contained in the exhaust gasses of the engine and the air-fuel ratio of the exhaust gasses.

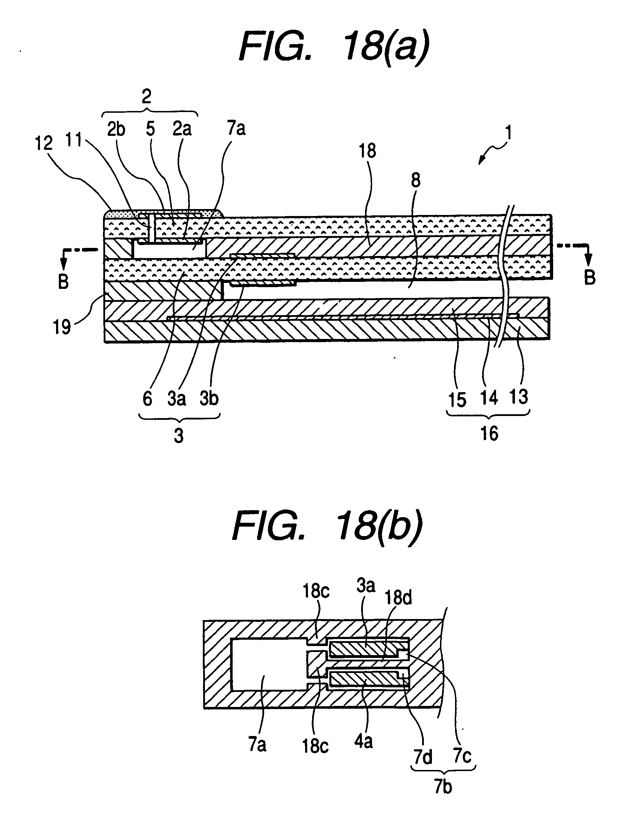

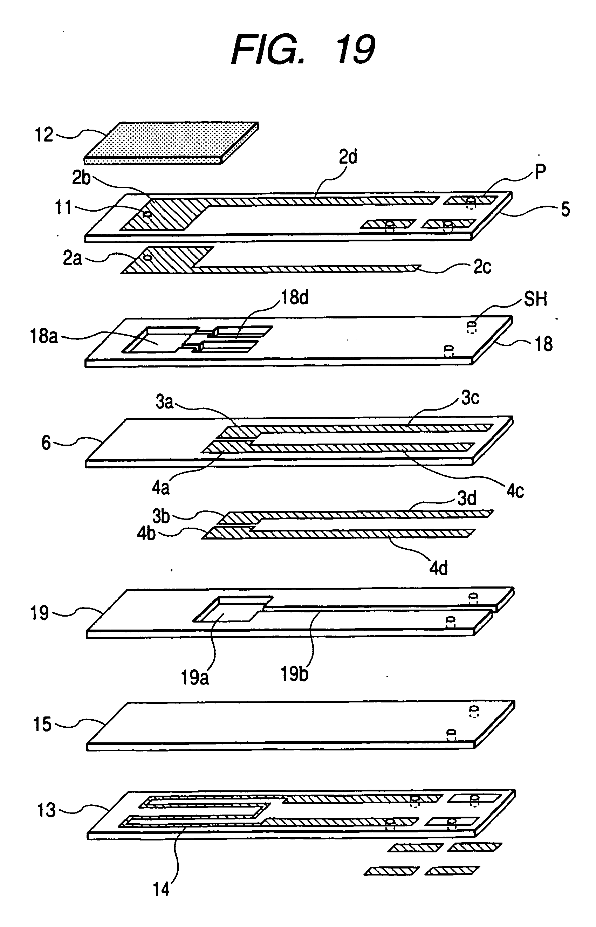

Figs. 18(a), 18(b), and 19 illustrate the gas sensor element 1 according to the twelfth embodiment (Comparative) which is a modification of the one of the sixth embodiment of Figs. 6(a) and 6(b).

The second chamber 7b of the gas cavity 7 is separated by the partition 18d into first and second sub-chambers 7c and 7d extending in parallel to the length of the gas sensor element 1. The electrode 3a of the oxygen monitor cell 3 is disposed within the first sub-chamber 7c, while the electrode 4a of the sensor cell 4 is disposed within the second sub-chamber 7d. The partition 18d has a square head disposed between the first and second chambers 7a and 7b to define two orifices 18c leading to the first and second sub-chambers 7c and 7d, respectively. The use of the partition 18d avoids dispersion of Au contained in the electrode 3a to the electrode 4a resulting in reduction in activation of the electrode 4a to dissociate NOx and also avoids physical interference between the oxygen monitor cell 3 and the sensor cell 4, thereby improving the accuracy of measuring the concentration of NOx.

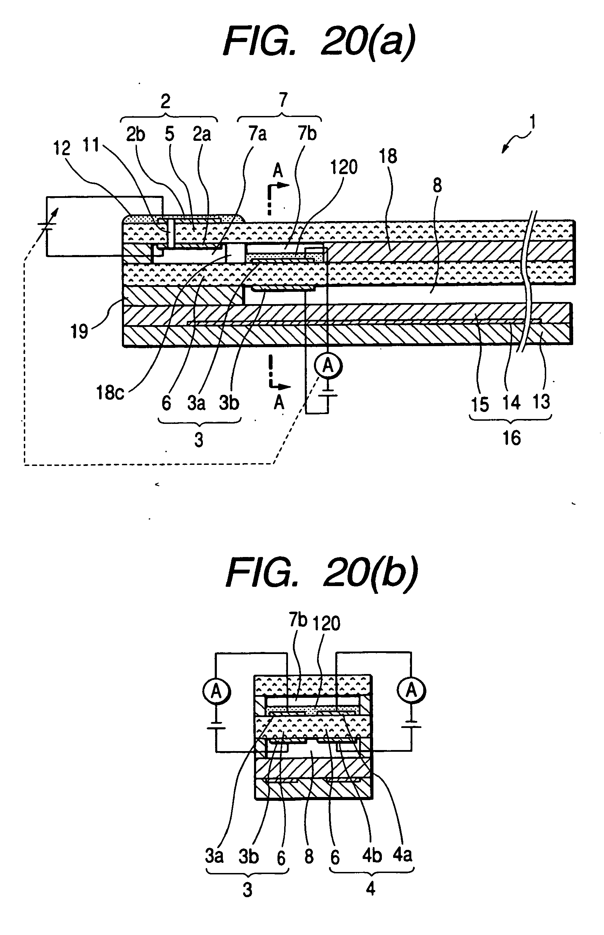

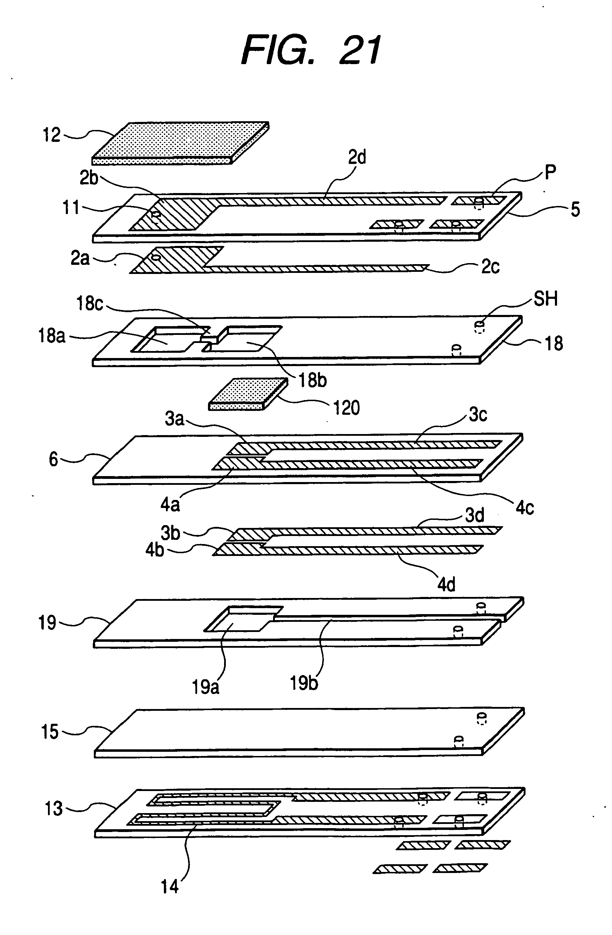

Figs. 20(a), 20(b), and 21 illustrate the gas sensor element 1 according to the thirteenth embodiment (Reference) which is different from the first embodiment only in that a porous protective layer 120 is disposed over the electrodes 3a of the oxygen monitor cell 3 and the electrode 4a of the sensor cell 4 in order to avoid dispersion of Au contained in the electrode 3a to the electrode 4a resulting in reduction in activation of the electrode 4a to dissociate NOx and also avoid physical interference between the oxygen monitor cell 3 and the sensor cell 4, thereby improving the accuracy of measuring the concentration of NOx.

## Claims

1. A gas sensor element (1) together with a current difference detector (9), the gas sensor element (1) comprising:
a gas cavity (7) into which gasses consisting essentially of oxygen molecules and a specified oxygen containing gas are admitted through a given dispersion resistance;
an oxygen pump cell (2) including an oxygen ion-conducting member, a first pump cell electrode (2b), and a second pump cell electrode (2a) which is exposed to the gas cavity (7), said oxygen pump cell (2) being responsive to application of a voltage across the first and second pump cell electrodes (2a, b) to selectively pump oxygen molecules into and out of said gas cavity (7) for adjusting a concentration of the oxygen molecules within said gas cavity (7) to a desired value;
an oxygen monitor cell (3) including an oxygen ion-conducting member, a first monitor cell electrode (3b), and a second monitor cell electrode (3a) which is exposed to the gas cavity (7), said oxygen monitor cell (3) working to produce an electric signal indicative of a concentration of the oxygen molecules within said gas cavity (7); and
a sensor cell (4) including an oxygen ion-conducting member, a first sensor cell electrode (4b), and a second sensor cell electrode (4a) which is exposed to said gas cavity (7), said sensor cell working to produce an electric signal indicative of a concentration of the specified oxygen containing gas within said gas cavity (7),
wherein said oxygen monitor cell and said sensor cell are disposed at substantially the same location in a direction of flow of the gases within the cavity and substantially symmetrically with respect to a direction of flow of the gasses within the gas cavity so that a distance between the gas inlet and an upstream end of the second monitor cell electrode exposed to the gas cavity is equal to a distance between the gas inlet and an upstream end of the second sensor cell electrode exposed to the gas cavity, the upstream end of the second monitor cell electrode being one of ends of the second monitor cell electrode which is located upstream than the other in the flow of the gasses, the upstream end of the second sensor cell electrode being one of ends of the second sensor cell electrode which is located upstream than the other in the flow of the gasses, and
wherein said oxygen monitor cell (3) is responsive to application of a voltage across the first and second monitor cell electrodes (3a, 3b) to produce a current flowing between the first and second monitor cell electrodes (3a, 3b), and said sensor cell (4) is responsive to application of a voltage across the first and second sensor cell electrodes (4a, 4b) to produce a current flowing between the first and second sensor cell electrodes (4a, 4b), and wherein the current difference detector (9) is provided to determine a difference between a current flowing through the first and second monitor cell electrodes of the oxygen monitor cell upon application of voltage applied across the first and second monitor cell electrodes and a current flowing through the first and second sensor cell electrodes of the sensor cell upon application of voltage applied across the first and second sensor cell electrodes, wherein the current difference detector (9) is configured to provide the difference between currents flowing through the oxygen monitor cell and the sensor cell as a sensor output indicating the concentration of the specified oxygen containing gas,
**characterized in that**
no partition is disposed between the oxygen monitor cell and the sensor cell with in the gas cavity.

## Patentansprüche

1. Gassensorelement (1) gemeinsam mit einem Stromstärkenunterschieddetektor (9), wobei das Gassensorelement (1) umfasst:
eine Gaskavität (7), in welche Gase, die im Wesentlichen aus Sauerstoffmolekülen und einem spezifischen Sauerstoff enthaltenden Gas bestehen, durch einen vorgegebenen Dispersionswiderstand eingelassen werden;
eine Sauerstoffpumpzelle (2), die ein sauerstoffionenleitfähiges Element, eine erste Pumpzellelektrode (2b) und eine zweite Pumpzellelektrode (2a), welche zu der Gaskavität (7) exponiert ist, beinhaltet, wobei die Sauerstoffpumpzelle (2) ein Antwortverhalten auf das Anlegen einer Spannung über die erste und zweite Pumpzellelektrode (2a, b) zeigt, so dass sie selektiv Sauerstoffmoleküle in und aus der Gaskavität (7) zum Einstellen einer Konzentration der Sauerstoffmoleküle innerhalb der Gaskavität (7) auf einen gewünschten Wert pumpt;
eine Sauerstoffmonitorzelle (3), die ein sauerstoffionenleitfähiges Element, eine erste Monitorzellelektrode (3b) und eine zweite Monitorzellelektrode (3a), welche zu der Gaskavität (7) exponiert ist, beinhaltet, wobei die Sauerstoffmonitorzelle (3) derart fungiert, dass sie ein elektrisches Signal erzeugt, das für eine Konzentration der Sauerstoffmoleküle innerhalb der Gaskavität (7) indikativ ist; und
eine Sensorzelle (4), die ein sauerstoffionenleitfähiges Element, eine erste Sensorzellelektrode (4b) und eine zweite Sensorzellelektrode (4a), welche zu der Gaskavität (7) exponiert ist, beinhaltet, wobei die Sensorzelle derart fungiert, dass sie ein elektrisches Signal erzeugt, das für eine Konzentration des spezifischen Sauerstoff enthaltenden Gases innerhalb der Gaskavität (7) indikativ ist,
wobei die Sauerstoffmonitorzelle und die Sensorzelle im Wesentlichen an derselben Position in einer Richtung des Gasstroms innerhalb der Kavität und im Wesentlichen symmetrisch bezüglich einer Richtung des Gasstroms innerhalb der Kavität angeordnet sind, so dass eine Strecke zwischen dem Gaseinlass und einem stromaufwärtigen Ende der zweiten Monitorzellelektrode, die zu der Gaskavität exponiert ist, gleich einer Strecke zwischen dem Gaseinlass und einem stromaufwärtigen Ende der zweiten Sensorzellelektrode, die zu der Gaskavität exponiert ist, ist, wobei das stromaufwärtige Ende der zweiten Monitorzellelektrode eines der Enden der zweiten Monitorzellelektrode ist, welche im Gasstrom stromaufwärtiger positioniert ist als das andere, wobei das stromaufwärtige Ende der zweiten Sensorzellelektrode eines der Enden der zweiten Sensorzellelektrode ist, welches im Gasstrom stromaufwärtiger als das andere positioniert ist, und
wobei die Sauerstoffmonitorzelle (3) ein Antwortverhalten auf das Anlegen einer Spannung über die erste und zweite Monitorzellelektrode (3a, 3b) zeigt, so dass sie einen Strom erzeugt, der zwischen der ersten und zweiten Monitorzellelektrode (3a, 3b) fließt, und die Sensorzelle (4) ein Antwortverhalten auf das Anlegen einer Spannung über die erste und zweite Sensorzellelektrode (4a, 4b) zeigt, so dass sie einen Strom erzeugt, der zwischen der ersten und zweiten Sensorzellelektrode (4a, 4b) fließt, und wobei der Stromstärkenunterschieddetektor (9) vorgesehen ist, um einen Unterschied zwischen einem Strom, der durch die erste und zweite Monitorzellelektrode der Sauerstoffmonitorzelle bei Anlegen einer Spannung, die über die erste und zweiten Monitorzellelektrode angelegt ist, fließt, und einem Strom, der durch die erste und zweite Sensorzellelektrode der Sensorzelle bei Anlegen einer Spannung, die über die erste und zweite Sensorzellelektrode angelegt ist, fließt, zu bestimmen, wobei der Stromstärkenunterschieddetektor (9) so konfiguriert ist, dass er den Unterschied zwischen den durch die Sauerstoffmonitorzelle und die Sensorzelle fließenden Strömen als einen Sensorausgabewert bereitstellt, der die Konzentration des spezifischen Sauerstoff enthaltenden Gases indiziert,
**dadurch gekennzeichnet, dass**
keine Abtrennung zwischen der Sauerstoffmonitorzelle und der Sensorzelle innerhalb der Gaskavität angeordnet ist.

## Revendications

1. Elément capteur de gaz (1) avec détecteur de différence de courant (9), l'élément capteur de gaz (1) comprenant :
une cavité à gaz (7) dans laquelle des gaz consistant essentiellement en molécules d'oxygène et un gaz contenant de l'oxygène spécifié sont admis via une résistance à la dispersion donnée ;
une cellule de pompe à oxygène (2) incluant un membre conduisant les ions oxygène, une première électrode de cellule de pompe (2b), et une seconde électrode de cellule de pompe (2a) qui est exposée à la cavité à gaz (7), ladite cellule de pompe à oxygène (2) étant sensible à l'application d'une tension aux bornes des première et seconde électrodes de cellule de pompe (2a, b) pour pomper sélectivement des molécules d'oxygène dans et hors de ladite cavité à gaz (7) pour ajuster une concentration des molécules d'oxygène dans ladite cavité à gaz (7) à une valeur souhaitée ;
une cellule de surveillance de l'oxygène (3) incluant un membre conduisant les ions oxygène, une première électrode de cellule de surveillance (3b) et une seconde électrode de cellule de surveillance (3a) qui est exposée à la cavité à gaz (7), ladite cellule de surveillance de l'oxygène (3) opérant pour produire un signal électrique indiquant une concentration des molécules d'oxygène dans ladite cavité à gaz (7) ; et
une cellule de capteur (4) incluant un membre conduisant les ions oxygène, une première électrode de cellule de capteur (4b) et une seconde électrode de cellule de capteur (4a) qui est exposée à ladite cavité à gaz (7), ladite cellule de capteur opérant pour produire un signal électrique indiquant une concentration du gaz contenant de l'oxygène spécifié dans ladite cavité à gaz (7),
où ladite cellule de surveillance de l'oxygène et ladite cellule de capteur sont disposées sensiblement au même endroit dans une direction d'écoulement des gaz dans la cavité et sensiblement symétriquement par rapport à une direction d'écoulement des gaz dans la cavité à gaz de sorte qu'une distance entre l'entrée de gaz et une extrémité amont de la seconde électrode de cellule de surveillance exposée à la cavité à gaz est égale à une distance entre l'entrée de gaz et une extrémité amont de la seconde électrode de cellule de capteur exposée à la cavité à gaz, l'extrémité amont de la seconde électrode de cellule de surveillance étant l'une des extrémités de la seconde électrode de cellule de surveillance qui est située en amont de l'autre dans l'écoulement des gaz, l'extrémité amont de la seconde électrode de cellule de capteur étant l'une des extrémités de la seconde électrode de cellule de capteur qui est située en amont de l'autre dans l'écoulement des gaz, et
où ladite cellule de surveillance de l'oxygène (3) est sensible à l'application d'une tension aux bornes des première et seconde électrodes de cellule de surveillance (3a, 3b) pour produire un courant circulant entre les première et seconde électrodes de cellule de surveillance (3a, 3b), et ladite cellule de capteur (4) est sensible à l'application d'une tension aux bornes des première et seconde électrodes de cellule de capteur (4a, 4b) pour produire un courant circulant entre les première et seconde électrodes de cellule de capteur (4a, 4b), et où le détecteur de différence de courant (9) est prévu pour déterminer une différence entre un courant circulant dans les première et seconde électrodes de cellule de surveillance de la cellule de surveillance de l'oxygène lors de l'application d'une tension appliquée aux bornes des première et seconde électrodes de cellule de surveillance et un courant circulant dans les première et seconde électrodes de cellule de capteur de la cellule de capteur lors de l'application d'une tension appliquée aux bornes des première et seconde électrodes de cellule de capteur, où le détecteur de différence de courant (9) est configuré pour fournir la différence entre des courants circulant dans la cellule de surveillance de l'oxygène et la cellule de capteur sous forme d'une grandeur de sortie de capteur indiquant la concentration du gaz contenant de l'oxygène spécifié, **caractérisé en ce qu'**aucune séparation n'est disposée entre la cellule de surveillance de l'oxygène et la cellule de capteur dans la cavité à gaz.
